# EUROPEAN PATENT SPECIFICATION

(11) **EP 2 739 756 B1**
(45) Date of publication and mention of the grant of the patent: **18.10.2017**
(21) Application number: 12822833.5
(22) Date of filing: 06.08.2012
(51) Int. Cl.: A23L 5/20, C13B 35/00

(54) **METHOD FOR REDUCING ACRYLAMIDE FORMATION IN MAKING OF MOLASSES**
VERFAHREN ZUR REDUKTION DER ACRYLAMIDBILDUNG BEI DER HERSTELLUNG VON MELASSE
PROCÉDÉ POUR RÉDUIRE LA FORMATION D'ACRYLAMIDE DANS LA PRÉPARATION DE MÉLASSES

(30) Priority: 05.08.2011 US 201113204514
(43) Date of publication of application: 11.06.2014
(73) Proprietor: Frito-Lay North America, Inc., Plano, TX 75024-4099 (US)
(72) Inventor: FAGAN, Scott, Dallas, TX 75201 (US); GRZEDA, Amanda, Allen, TX 75013 (US); TOPOR, Michael, Grant, Little Elm, TX 75068 (US)
(74) Representative: Jenkins, Peter David
(86) International application number: PCT/US2012/049729
(87) International publication number: WO 2013/022828

(56) References cited:
- US-A- 4 111 714
- US-A1- 2007 141 225
- US-A1- 2007 141 225
- US-A1- 2007 141 227
- US-A1- 2009 074 915
- US-B1- 7 306 679
- US-B1- 7 306 679
- ZUZANA CIESAROVÁ - EUGEN KISS - PETRA BOEGL: "Impact of L-asparaginase on acrylamide content in potato products", JOURNAL OF FOOD AND NUTRITION RESEARCH VÚP FOOD RESEARCH INSTITUTE, vol. 45, 1 January 2006 (2006-01-01), pages 141-146, XP55143830,
- CIESAROVA ET AL.: 'Impact of L-asparaginase on acrylamide content in potato products.' JOUMAL OF FOOD AND NUTRITION RESEARCH. vol. 45, no. 4, 2006, pages 141 - 146, XP055143830

## Description

### BACKGROUND OF THE INVENTION

### Technical Field

The present invention relates to a method for reducing the amount of acrylamide in the production of molasses and permits the production of molasses having significantly reduced levels of acrylamide. The invention more specifically relates to adding the enzyme aspraginase to the molasses fraction during the molasses making process at a stage that optimizes the effectiveness and efficiency of the added asparaginase.

### Description of Related Art

The chemical acrylamide has long been used in its polymer form in industrial applications for water treatment, enhanced oil recovery, papermaking, flocculants, thickeners, ore processing and permanent press fabrics. Acrylamide participates as a white crystalline solid, is odorless, and is highly soluble in water (2155 g/L at 30°C). Synonyms for acrylamide include 2-propenamide, ethylene carboxamide, acrylic acid amide, vinyl amide, and propenoic acid amide. Acrylamide has a molecular mass of 71.08, a melting point of 84.5°C, and a boiling point of 125°C at 25 mmHg.

In very recent times, a wide variety of foods have tested positive for the presence of acrylamide monomer. Acrylamide has especially been found primarily in carbohydrate food products that have been heated or processed at high temperatures. Examples of foods that have tested positive for acrylamide include coffee, cereals, cookies, potato chips, crackers, french-fried potatoes, breads and rolls, and fried breaded meats. In general, relatively low contents of acrylamide have been found in heated protein-rich foods, while relatively high contents of acrylamide have been found in carbohydrate-rich foods, compared to non-detectable levels in unheated and boiled foods. Reported levels of acrylamide found in various similarly processed foods include a range of 330 - 2,300 (µg/kg) in potato chips, a range of 300 - 1100 (µg/kg) in french fries, a range 120 - 180 (µg/kg) in corn chips, and levels ranging from not detectable up to 1400 (µg/kg) in various breakfast cereals.

Acrylamide has not been determined to be detrimental to humans, but its presence in food products, especially at elevated levels, is undesirable. Therefore, it would be desirable to develop one or more methods of reducing the level of acrylamide in the end product of heated or thermally processed foods. Ideally, such a process should substantially reduce or eliminate the acrylamide in the end product without adversely affecting the quality and characteristics of the end product. Further, the method should be easy to implement and, preferably, add little or no cost to the overall process.

US2007/014227 discloses a method for reducing the amount of asparagine in food products that are thermally processed.

### SUMMARY OF THE INVENTION

In the inventive process of the instant application, asparaginase is added to the sugar cane juice during the molasses making process or the sugar refining process at a point of maximum efficiency and effectiveness for the added asparaginase. The added asparaginase reduces the acrylamide formation in molasses and sugar to a desired level while minimally affecting the quality and characteristics of the end product.

### BRIEF DESCRIPTION OF THE DRAWINGS

The novel features believed characteristic of the invention are set forth in the appended claims. The invention itself, however, as well as a preferred mode of use, further objectives and advantages thereof, will be best understood by reference to the following detailed description of illustrative embodiments when read in conjunction with the accompanying drawings, wherein:
**Figure 1** is a block diagram of one method of producing molasses from sugar cane.
**Figure 2** is a block diagram of one method of refining raw sugar.

### DETAILED DESCRIPTION

It is presently believed that acrylamide is formed from the presence of amino acids and reducing sugars. For example, it is believed that a reaction between free asparagine, an amino acid commonly found in raw vegetables, and free reducing sugars accounts for the majority of acrylamide found in fried food products.

The formation of acrylamide from amino acids other than asparagine is possible, but it has not yet been confirmed to any degree of certainty. For example, some acrylamide formation has been reported from testing glutamine, methionine, cysteine, and aspartic acid as precursors. These findings are difficult to confirm, however, due to potential asparagine impurities in stock amino acids. Nonetheless, asparagine has been identified as the amino acid precursor most responsible for the formation of acrylamide.

Since acrylamide in foods is a recently discovered phenomenon, its exact mechanism of formation has not been confirmed. However, it is now believed that the most likely route for acrylamide formation involves a Maillard reaction. The Maillard reactions have long been recognized in food chemistry as one of the most important chemical reactions in food processing and can affect flavor, color, and the nutritional value of the food. The Maillard reactions require heat, moisture, reducing sugars, and amino acids.

The Maillard reactions involve a series of complex reactions with numerous intermediates, but can be generally described as involving three steps. The first step of the Maillard reactions involve the combination of a free amino group (from free amino acids and/or proteins) with a reducing sugar (such as glucose) to form Amadori or Heyns rearrangement products. The second step involves degradation of the Amadori or Heyns rearrangement products via different alternative routes involving deoxyosones, fission, or Strecker degradation. A complex series of reactions - including dehydration, elimination, cyclization, fission, and fragmentation - results in a pool of flavor intermediates and flavor compounds. The third step of the Maillard reactions is characterized by the formation of brown nitrogenous polymers and co-polymers.

Again, asparagine is one of the amino acids that is believed to participate in the Maillard reactions, and is also believed to be a precursor in the formation of acrylamide. The enzyme asparaginase breaks asparagine down into aspartic acid and ammonia. Asparaginase, when added to food products that contain asparagine, has been found to decrease the amount of acrylamide formed because the reaction of asparaginase with asparagine can be initiated before the Maillard reaction takes place during food processing. However, Applicants have found that the addition of asparaginase to molasses during its production should take into account several important factors to ensure the asparaginase is both efficient and effective in reducing the amount of acrylamide formed. The invention is defined by the appended set of claims.

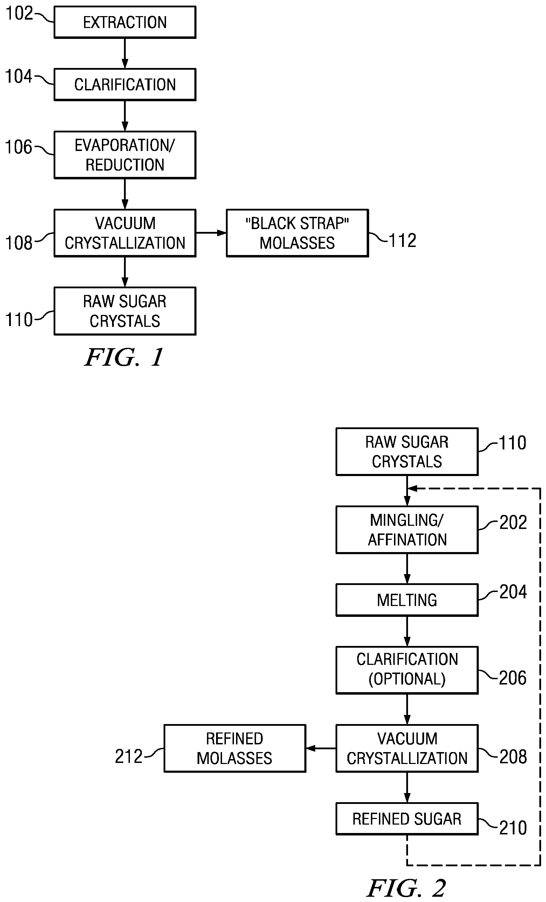

Figure 1 is a block diagram that depicts the general processing steps of one method used to make molasses. The process begins with raw sugar cane juice, which is extracted from sugar cane. Although molasses can be made from other sugar sources, such as sugar beets, Applicants focus herein on the traditional and most widely-used process that starts with sugar cane juice. The sugar cane juice is extracted 102 from sugar cane by mashing, milling, crushing or otherwise comminuting sugar cane that has been stripped of its leaves. Water is added to the process to facilitate extraction of the juice.

The juice is then clarified 104 (filtered) and subjected to a number of evaporation/reduction steps 106 that boil the juice and concentrate it into a syrup. In the clarification step 104, juice is heated to about 95°C to 100°C, and lime (or other food grade base) is added to raise the pH to about 6.5 to 7.5. The lime, colloidal and suspended solids, mud and bagasse particles settle out, resulting in a light colored, translucent solution. The evaporation step heats the resulting solution to temperatures above the boiling point of water, and produces a syrup of about 60-70 Brix. After a number of evaporation steps, sugar begins to crystallize in the syrup. The number of steps performed depends on a number of factors, including the temperature and pressure of the unit operations, and the moisture content of the sugar cane juice. The raw sugar crystals 110 are separated from the syrup in a vacuum crystallization step 108, and the remaining syrup is one variety of molasses 112. The crystallization step 108 is conducted under vacuum to enable lower temperatures to be used, which minimizes sucrose degradation.

Figure 2 is a block diagram that depicts the general processing steps of one method used to refine the raw sugar 110 that is output from the process depicted in Figure 1. Raw sugar crystals 110 are mixed with a "mother liquor" (which usually is a portion of the molasses separated from the raw sugar crystals in the previous process) in a mingling/affination step 202. In the mingling step 202, the mixture is sprayed with hot water (between 80°C and 100°C), and spun in a centrifuge to produce a syrup. The light fraction exiting the centrifuge is the sugar syrup that is further refined, and the heavy fraction is a waste stream comprising primarily inverted sugar, ash and undesirable organics. The mingled sugar syrup stream is then transferred to a melting (or dissolving) step 204. In the melting step, water is added to produce a "melt liquor" at 68-73 Brix. The melted mixture is then, optionally, clarified 206. The clarification step can involve, for example, mixing phosphoric acid and calcium hydroxide with the syrup, which combine to precipitate calcium phosphate. Calcium phosphate particles entrap or absorb some of the impurities. The clarification step can also involve filtering the syrup through activated carbon or bone char.

The final step in sugar refining is a vacuum crystallization step 208. This is typically a four stage process where the sugar mixture is mechanically stirred and boiled at low pressure and low temperature to reduce sucrose degradation. The output of this vacuum crystallization step is a refined sugar stream 210 and a molasses stream 212 which are lighter in color than the sugar and molasses output from the process depicted in Figure 1. The refined sugar can be run through the process of Figure 2 again to further refine it, and produce successive refined sugar and molasses streams which emerge lighter in color than those produced by the previous iteration.

The sugary plant material used to make the starting juice typically contains asparagine and reducing sugars, which means it has the potential to form acrylamide when heated. In fact, Applicants have measured commercially available molasses and found that some molasses does contain a significant amount of acrylamide.

Commercially available molasses is sold in varieties of different color, ranging from light golden molasses to dark brown molasses, which is referred to in the United States colloquially as blackstrap molasses. The molasses produced by the process in Figure 1 is generally the darkest in color, so-called "blackstrap" molasses. Applicants herein have found that generally, a molasses that is darker in color has a higher level of acrylamide. Applicants theorize, without being limited by theory, that (assuming the same or similar starting materials) darker molasses is formed from syrup that has been cooked at higher temperatures or for longer periods of time, at lower moisture content, than lighter molasses. Moreover, Applicants have found that there is a point during the molasses making process depicted in Figure 1 at which asparagine begins rapidly converting into acrylamide. This point likely occurs during the multi-stage evaporation step 106 when the moisture content of the syrup drops low enough, and the temperature of the syrup rises high enough, that the Maillard reactions begin to form the brown products characteristic of the Maillard reactions.

Applicants have also determined that acrylamide can be formed during the sugar refining process depicted in Figure 2. Because the temperature during the melting step 204 generally occurs at high temperature, most of the acrylamide formed during sugar refining likely occurs during this melting step.

Asparaginase could theoretically be added at any stage during the molasses making process of Figure 1, or the sugar refining process of Figure 2. However, the sugar cane juice begins the molasses making process as a dilute solution, and is clarified and concentrated through several evaporation steps. Therefore, if asparaginase is added too early, a significant portion of it will be carried away along with the waste streams from each step in the process before it has a chance to work, making it less effective and less efficient. The earlier in the process asparaginase is added, the more asparaginase must be used, driving up costs significantly and potentially adversely affecting the taste of the molasses. However, if asparaginase is added too late in the process, significant amounts of the asparagine will have already converted to acrylamide, and the asparaginase will again be ineffective. Furthermore, the reaction between asparaginase and asparagine is most efficient at a temperature between 43,3-48,9° C (110-120°F) and almost completely stops at temperatures higher than about 60° C (140° F) because the enzyme asparaginase begins to denature. Therefore, if asparaginase is added in close proximity to a high temperature step in the process, it will not be effective in reducing acrylamide formation because the high temperatures will denature the asparaginase.

Applicants have measured the level of asparagine and acrylamide in several commercially available sugar and molasses products. Four different types of brown (unrefined) sugar (turbinado, demerara, raw and muscovado) showed asparagine levels, on a dry basis, ranging from 11.38 ppm to 2,169.39 ppm, and acrylamide levels ranging from 12.41 ppb to 1,561.10 ppb. White (refined) sugar contained 1.9 ppm asparagine on a dry basis, and undetectable levels of acrylamide.

Molasses products varying from light color to dark color were obtained from two different manufacturers, and analyzed for asparagine and acrylamide content. The results are shown in the following tables.

**Table 1: Acrylamide and Asparagine Levels in Molasses from Manufacturer A**

| Sample # | 1 | 2 | 3 | 4 | 5 | 6 | 7 | 8 | 9 |
|---|---|---|---|---|---|---|---|---|---|
| Acrylamide (dry basis) | 268 | 384 | 513 | 521 | 577 | 978 | 3030 | 4430 | 4498 |
| Asparagine (dry basis | 34 | 37 | 38 | 59 | 45 | 134 | 371 | 1897 | 599 |
| Color | Light → Dark | | | | | | | | |

**Table 2: Acrylamide and Asparagine Levels in Molasses from Manufacturer B**

| Sample # | 1 | 2 | 3 | 4 | 5 | 6 | 7 | 8 | 9 |
|---|---|---|---|---|---|---|---|---|---|
| Acrylamide (dry basis) | 720 | 1029 | 1269 | 1480 | 1594 | 1604 | 2354 | 3604 | 6101 |
| Asparagine (dry basis | 75 | 144 | 75 | 240 | 134 | 116 | 417 | 1358 | 124 |
| Color | Light → Dark | | | | | | | | |

As can be seen therein, darker molasses generally has a higher level of acrylamide. However, the asparagine content is also generally higher in darker molasses, except for the darkest available molasses, which has very little asparagine. Applicants herein theorize that in the darkest molasses, the acrylamide reaction has reached a tipping point and has begun rapidly consuming asparagine to produce acrylamide.

A sample of sugar cane juice was also measured for acrylamide and asparagine content, and was found to contain undetectable levels of acrylamide, and 23.26 ppm asparagine on a dry basis. A sample of sugar cane syrup, which is sugar cane juice that has been heated once to reduce it to a syrup, was found to contain about 122.62 ppb acrylamide, and 30.54 ppm asparagine.

From the foregoing information, it can be seen that molasses and unrefined sugar exit the molasses making process of Figure 1 with significant levels of both asparagine and acrylamide. Furthermore, the cane syrup that exits the multi-stage evaporation step 106 also has significant levels of acrylamide and asparagine. Therefore, in order to reduce acrylamide formation in molasses, it is important to intervene at some point prior to the multi-stage evaporation step 106. It is not possible to add asparaginase during the evaporation step because the temperature is at least about 100 °C (212° F) and asparaginase denatures at temperatures above 60° C (140° F). Moreover, recall that the sugar solution is diluted at the beginning of the molasses making process. Therefore, it would not be economical to add asparaginase to the sugar cane juice solution that is created at the first milling step.

In one embodiment of the present invention, asparaginase is added to the sugar cane juice after the clarification step 104 but before the evaporation step 106. In other words, asparaginase is added to the sugar cane juice immediately preceding the evaporation step. At this point, the sugar cane juice is at maximum concentration prior to being heated to a temperature above which the asparaginase becomes ineffective. Therefore, the least amount of asparaginase will be required to inactivate the asparagine, thereby efficiently and effectively reducing formation of acrylamide.

Because the raw sugar and molasses that exit the process depicted in Figure 1 contain both acrylamide and asparagine, asparaginase can also be added to reduce acrylamide formation in the sugar refining process of Figure 2. The melting step 204 is typically the only step in the sugar refining process that involves high temperature, so Applicants believe that the majority of acrylamide formation during the sugar refining process occurs during the melting step. Therefore, asparaginase can be added, in another embodiment of the present invention, during or immediately after the mingler/affination step 202. In other words, in one embodiment, the asparaginase is added to the raw sugar solution immediately before the melting step.

Applicants herein have treated three separate solutions of blackstrap molasses, turbinado sugar, and raw cane sugar, respectively, with asparaginase, and measured the asparagine content over time. Asparaginase was added to these solutions at 1 enzyme units (U) asparaginase per gram (g) of sugar material, on a wet basis (U/g). The asparaginase was added at room temperature and at pH ranging from 5.5 for blackstrap molasses to 6.8 for the raw cane sugar. Applicants found that the asparaginase reduced asparagine content in all three solutions to about 85% to 90% of the maximum reduction in asparagine after about 5 to 10 minutes of contact time, even though the three solutions started with 20, 100 and 175 ppm asparagine at the beginning of the test. Furthermore, after about 100 minutes of contact time, all three solutions were reduced to between 5 and 10 ppm asparagine. Thus, a relatively short contact time is needed when asparaginase is added a 1 U/g to inactivate the most of the asparagine present in sugar and molasses products, and a longer contact time (greater than about 90 minutes) will inactivate substantially all of the asparagine present.

Applicants have found that adding asparaginase at levels below about 0.1 U/g was not effective at reducing acrylamide formation in the sugar refining processes. At a minimum, at least 0.25 U/g asparaginase must be added to effectively reduce acrylamide formation, with the understanding that lower concentrations of asparaginase will require longer contact times than when higher concentrations of asparaginase are added. Longer contact times increase the cost of the process and risk denaturing the enzyme before it has had a chance to work. Applicants have also found that when asparaginase is added at 1000 U/g, asparagine is reduced to about the same level as when 1 U/g is added, except that 1000 U/g reduced the asparagine levels more quickly. In a commercially practicable and efficient process, asparagine should be added at levels between about 1 U/g and 4 U/g. At these levels, asparagine is reduced to acceptable levels in a reasonable period of time.

In one embodiment, asparaginase is added to the molasses making process of Figure 1 directly to the stream exiting the clarification step. In this embodiment, the asparaginase reacts with the asparagine in the juice as it is transferred towards the evaporator, and while it is in the evaporator but below about 60° C (140° F). In another embodiment, the stream exiting the clarification step is transferred to a holding tank (not shown) and combined with asparaginase. Preferably, the holding tank maintains the temperature of the asparaginase/sugar cane juice solution between a temperature of 43,3 -54,4 °C (100-130°F), and most preferably between 37,8-48,9°C (110-120°F). After a predetermined amount of time in the holding tank, the asparaginase-treated juice is transferred to the evaporator and the molasses making process can continue as in the prior art. The holding tank can be a continuous, semi-continuous or batch process.

In another embodiment, asparaginase is added during the sugar refining process of Figure 2 to the mingled sugar solution after it exits the mingling step, but before it enters the melting step. This addition of asparaginase can be direct, or in-line, as with the molasses making embodiment described above. In another embodiment, asparaginase is added to the mingled sugar solution in a holding tank, as described for the molasses making embodiments described above.

The embodiments of the invention described above can be used individually, but can also be used in combination with each other or other methods of reducing acrylamide. The combination of embodiments can be utilized to further drive down the incidence of acrylamide in molasses from that attainable by single embodiments, or the combinations can be utilized to attain a low level of acrylamide without undue alterations in the taste and texture of the molasses.

## Claims

1. A method of reducing the amount of acrylamide produced during the making of molasses, said method comprising the steps of:
adding asparaginase to a clarified sugar solution to make a treated sugar solution;
evaporating an amount of water from said treated sugar solution to produce a treated sugar syrup; and
separating said sugar syrup into a raw sugar fraction and a molasses fraction.

2. The method of claim 1 further comprising the steps of:
prior to said adding step, milling a sugar source material with water to make a sugar solution, and clarifying said sugar solution to produce said clarified sugar solution.

3. The method of claim 1 further comprising maintaining said treated sugar solution at a temperature between 37.8°C (100°F) and 54.4°C (130°F) for at least 5 minutes.

4. The method of claim 1 further comprising maintaining said treated sugar solution at a temperature between 43.3°C (110°F) and 48.9°C (120°F) for at least 5 minutes.

5. The method of claim 1 wherein said adding step occurs in a holding tank.

6. The method of claim 1 wherein said adding step further comprises adding said asparaginase to said clarified sugar solution in an amount between 1 and 4 enzyme units of asparaginase per gram of sugar on a wet basis.

7. A method of reducing the amount of acrylamide produced during sugar refining, said method comprising the steps of:
adding asparaginase to a mingled raw sugar solution;
melting said raw sugar solution to produce a melted sugar solution;
optionally clarifying said melted sugar solution to produce a clarified sugar solution; and
separating said melted or clarified sugar solution into a refined sugar fraction and a molasses fraction.

8. The method of claim 7 wherein said adding step occurs in a holding tank.

9. The method of claim 7 further comprising maintaining said sugar solution at a temperature between 37.8°C (100°F) and 54.4°C (130°F) for at least 5 minutes after said adding step.

10. The method of claim 7 further comprising maintaining said sugar solution at a temperature between 43.3°C (110°F) and 48.9°C (120°F) for at least 5 minutes after said adding step.

11. The method of claim 7 wherein said adding step further comprises adding said asparaginase to said clarified sugar solution in an amount between 1 and 4 enzyme units of asparaginase per gram of sugar on a wet basis.

## Patentansprüche

1. Verfahren zur Verringerung der Acrylamidmenge, die während der Herstellung von Melassen produziert wird, wobei das Verfahren die folgenden Schritte umfasst:
Zugeben von Asparaginase zu einer geklärten Zuckerlösung, um eine behandelte Zuckerlösung herzustellen;
Verdampfen einer Wassermenge aus der behandelten Zuckerlösung, um einen behandelten Zuckersirup zu produzieren; und
Trennen des Zuckersirups in eine Rohzuckerfraktion und eine Melassenfraktion.

2. Verfahren nach Anspruch 1, das weiterhin die folgenden Schritte umfasst:
vor dem Zugabeschritt Mahlen eines Zuckerquellmaterials mit Wasser, um eine Zuckerlösung herzustellen, und Klären der Zuckerlösung, um die geklärte Zuckerlösung zu produzieren.

3. Verfahren nach Anspruch 1, das weiterhin das Halten der behandelten Zuckerlösung auf einer Temperatur zwischen 37,8 °C (100 °F) und 54,4 °C (130 °F) für mindestens 5 Minuten umfasst.

4. Verfahren nach Anspruch 1, das weiterhin das Halten der behandelten Zuckerlösung auf einer Temperatur zwischen 43,3 °C (110 °F) und 48,9 °C (120 °F) für mindestens 5 Minuten umfasst.

5. Verfahren nach Anspruch 1, wobei der Zugabeschritt in einem Lagertank erfolgt.

6. Verfahren nach Anspruch 1, wobei der Zugabeschritt weiterhin das Zugeben der Asparaginase zu der geklärten Zuckerlösung in einer Menge zwischen 1 und 4 Enzymeinheiten Asparaginase pro Gramm Zucker auf einer feuchten Basis umfasst.

7. Verfahren zur Verringerung der Acrylamidmenge, die während der Zuckerraffination produziert wird, wobei das Verfahren die folgenden Schritte umfasst:
Zugeben von Asparaginase zu einer vermengten Rohzuckerlösung;
Schmelzen der Rohzuckerlösung, um eine geschmolzene Zuckerlösung zu produzieren;
gegebenenfalls Klären der geschmolzenen Zuckerlösung, um eine geklärte Zuckerlösung zu produzieren; und
Trennen der geschmolzenen oder geklärten Zuckerlösung in eine raffinierte Zuckerfraktion und eine Melassenfraktion.

8. Verfahren nach Anspruch 7, wobei der Zugabeschritt in einem Lagertank erfolgt.

9. Verfahren nach Anspruch 7, das weiterhin das Halten der Zuckerlösung auf einer Temperatur zwischen 37,8 °C (100 °F) und 54,4 °C (130 °F) für mindestens 5 Minuten nach dem Zugabeschritt umfasst.

10. Verfahren nach Anspruch 7, das weiterhin das Halten der Zuckerlösung auf einer Temperatur zwischen 43,3 °C (110 °F) und 48,9 °C (120 °F) für mindestens 5 Minuten nach dem Zugabeschritt umfasst.

11. Verfahren nach Anspruch 7, wobei der Zugabeschritt weiterhin das Zugeben der Asparaginase zu der geklärten Zuckerlösung in einer Menge zwischen 1 und 4 Enzymeinheiten Asparaginase pro Gramm Zucker auf einer feuchten Basis umfasst.

## Revendications

1. Un procédé permettant de réduire la quantité d'acrylamide produite au cours de la fabrication de molasses, ledit procédé comprenant les étapes consistant à :
ajouter de l'asparaginase à une solution de sucre clarifiée pour faire une solution de sucre traitée ;
faire évaporer une quantité d'eau de ladite solution de sucre traitée pour produire un sirop de sucre traité ; et
séparer ledit sirop de sucre en une fraction de sucre brut et une fraction de molasses.

2. Le procédé selon la revendication 1 comprenant en outre les étapes consistant à :
avant ladite étape d'ajout, broyer une matière source de sucre avec de l'eau pour faire une solution de sucre, et
clarifier ladite solution de sucre pour produire ladite solution de sucre clarifiée.

3. Le procédé selon la revendication 1 consistant en outre à maintenir ladite solution de sucre traitée à une température comprise entre 37,8°C (100°F) et 54,4°C (130°F) pendant au moins 5 minutes.

4. Le procédé selon la revendication 1 consistant en outre à maintenir ladite solution de sucre traitée à une température comprise entre 43,3°C (110°F) et 48,9°C (120°F) pendant au moins 5 minutes.

5. Le procédé selon la revendication 1 dans lequel ladite étape d'ajout a lieu dans une cuve de retenue.

6. Le procédé selon la revendication 1 dans lequel ladite étape d'ajout consiste en outre à ajouter ladite asparaginase à ladite solution de sucre clarifiée dans une quantité comprise entre 1 et 4 unités enzymatiques d'asparaginase par gramme de sucre sur une base humide.

7. Un procédé permettant de réduire la quantité d'acrylamide produite au cours du raffinage de sucre, ledit procédé comprenant les étapes consistant à :
ajouter de l'asparaginase à une solution de sucre brut mélangée ;
faire fondre ladite solution de sucre brut pour produire une solution de sucre fondu ;
en option, clarifier ladite solution de sucre fondu pour produire une solution de sucre clarifiée ; et
séparer ladite solution de sucre fondue ou clarifiée en une fraction de sucre raffiné et une fraction de molasses.

8. Le procédé selon la revendication 7 dans lequel ladite étape d'ajout a lieu dans une cuve de retenue.

9. Le procédé selon la revendication 7 comprenant en outre le maintien de ladite solution de sucre à une température comprise entre 37,8°C (100°F) et 54,4°C (130°F) pendant au moins 5 minutes après ladite étape d'ajout.

10. Le procédé selon la revendication 7 comprenant en outre le maintien de ladite solution de sucre à une température comprise entre 43,3°C (110°F) et 48,9°C (120°F) pendant au moins 5 minutes après ladite étape d'ajout.

11. Le procédé selon la revendication 7 dans lequel ladite étape d' ajout consiste en outre à ajouter ladite asparaginase à ladite solution de sucre clarifiée dans une quantité comprise entre 1 et 4 unités enzymatiques d'asparaginase par gramme de sucre sur une base humide.
